# EUROPÄISCHE PATENTSCHRIFT

(11) **EP 4 415 958 B1**
(45) Veröffentlichungstag und Bekanntmachung des Hinweises auf die Patenterteilung: **24.12.2025**
(21) Anmeldenummer: 22793106.0
(22) Anmeldetag: 10.10.2022
(51) Int. Cl.: B29D 30/06, B60C 11/00, B60C 11/11, B60C 11/13, B29D 30/66

(54) **ENTLÜFTUNGSEINHEIT, VULKANISATIONSFORM FÜR EINEN FAHRZEUGLUFTREIFEN UND FAHRZEUGLUFTREIFEN**
VENTILATION UNIT, VULCANIZATION MOLD OF A VEHICLE PNEUMATIC TYRE AND PNEUMATIQUE TYRE
UNITÉ DE VENTILATION, MOULE DE VULCANISATION D'UN PNEUMATIQUE DE VÉHICULE ET PNEUMATIQUE DE VÉHICULE

(30) Priorität: 13.10.2021 DE 102021211568
(43) Veröffentlichungstag der Anmeldung: 21.08.2024
(73) Patentinhaber: Continental Reifen Deutschland GmbH, 30175 Hannover (DE)
(72) Erfinder: GLEESON, Ruaidhri, 30175 Hannover (DE); PANG-JIAN-XIANG, Edwin, 30175 Hannover (DE)
(74) Vertreter: Continental Corporation
(86) Internationale Anmeldenummer: PCT/DE2022/200233
(87) Internationale Veröffentlichungsnummer: WO 2023/061540

(56) Entgegenhaltungen:
- WO-A1-2020/244852
- AT-B- 305 062
- DE-A1- 102016 215 732
- DE-A1- 102019 205 371
- KR-A- 20200 000 013
- US-A1- 2012 256 349
- US-A1- 2014 216 622

## Beschreibung

Die Erfindung betrifft eine Entlüftungseinheit für eine Vulkanisationsform eines Fahrzeugluftreifens mit Formsegmenten mit je einer Forminnenseite, einem in eine Bohrung eines Formsegmentes einpressbaren Gehäuse und einem im Gehäuse positionierten und gegenüber diesem unter Federkraft stehendem, beweglichen Ventileinsatz mit einem Ventilschaft und einem Ventilteller, welcher eine dem zu vulkanisierenden Rohreifen zugewandte Oberseite aufweist, wobei der Ventilteller während des Einformvorganges des Rohreifens mit der Oberfläche des Rohreifens in Kontakt kommt und eine ebene Basisfläche aufweist, die im geschlossenen Zustand der Entlüftungseinheit mit der Forminnenseite eine einheitliche Fläche bildet.

In Vulkanisationsformen für Fahrzeugluftreifen befindet sich üblicherweise eine Vielzahl von Entlüftungsbohrungen, in welche Entlüftungseinheiten eingesetzt sind, die für ein Abführen der beim Einformen des Reifens zwischen dem Reifen und der Form befindlichen Luft sorgen. Während des Einformvorganges des Reifenrohlings sind die Ventileinsätze geöffnet, die Ventilteller stehen an der Forminnenseite etwas über, sodass die erforderliche Entlüftung während des Einformvorganges des Reifenrohlings stattfinden kann. Die Oberseite des Reifenrohlings kommt während des Einformens mit den Ventiltellern in Kontakt, sodass die Ventilteller schließlich die Bohrungen verschließen und bei eingeformtem Reifenrohling dafür sorgen, dass das Entstehen von Gummiaustrieben während der Vulkanisation des Reifens zumindest weitgehend verhindert wird. Eine Entlüftungseinheit der eingangs genannten Art ist beispielsweise aus der DE 10 2019 205 371 A1 bekannt. Bei dieser bekannten Ausführung weist die Oberseite des Ventiltellers eine flächenbezogene Rauheit Sa nach DIN EN ISO 25178 auf, welche 5 µm bis 100 µm beträgt. Diese Rauheit ist der arithmetische Mittelwert der Beträge der Profilwerte des Rauheitsprofils nach der erwähnten Norm. Die Rauheit wird insbesondere durch die Applikation einer thermischen Spritzschicht auf die Basisfläche der Oberseite des Ventiltellers gebildet, kann jedoch auch durch ein Erodierverfahren, durch ein Ätzverfahren oder durch Plandrehen oder Schleifen ausgebildet werden. Die Rauheit der Oberseite des Ventiltellers überträgt sich bei der Vulkanisation des Rohreifens auf dessen Außenfläche, insbesondere auf den Laufstreifenbereich des Reifens, sodass an den Stellen, wo die Abdrücke der Ventiltelleroberflächen entstanden sind, entsprechend rauere Stellen zur Verfügung stehen, die die Eis- und Schneeperformance etwas verbessern helfen.

Aus der DE 10 2016 215 732 A1 ist ferner eine Vulkanisationsform für Fahrzeugluftreifen mit Formsegmenten mit je einer Forminnenseite mit einer mantelförmigen Fläche und Stegen bekannt, wobei die mantelförmige Fläche zumindest bereichsweise mit dieser eine Rauheit verleihenden, statistisch über die Fläche verteilten, halbkugelförmige Erhebungen mit jeweils einem Radius von 200 µm bis 600 µm versehen ist. Die Erhebungen sind beispielsweise durch Galvanisieren aufgebracht worden. Der in einer solchen Vulkanisationsform geheizte Reifen weist am Laufstreifen halbkugelförmige Vertiefungen an der Laufstreifenperipherie auf, welche durch Wasseraufnahme und Wasserverdrängung die Reibkraft zum Untergrund durch gezielte Druckerhöhung verbessern sollen.

Insbesondere bei Vulkanisationsformen, die mit Lamellen zum Ausformen von einer Vielzahl von Einschnitten mit einer Breite von insbesondere 0,40 mm bis 0,80 mm und/oder von Mikroeinschnitten mit einer Breite von insbesondere 0,10 mm bis 0,30 mm im Laufstreifen versehen sind, ist es für ein einwandfreies Ausformen der Einschnitte und/oder Mikroeinschnitte erforderlich, für ein optimales Abführen der Luft zwischen dem einzuformenden Rohreifen und der Forminnenseite zu sorgen. Ein optimales Entlüften erfordert daher in den Formteilen das Vorsehen einer Vielzahl von Entlüftungsbohrungen mit Entlüftungseinheiten. Die Abdrücke bzw. Einprägungen der Ventiltelleroberflächen der Entlüftungseinheiten bedecken somit einen nicht unwesentlichen Anteil an der mit dem Untergrund in Kontakt kommenden Positivfläche von Profilblöcken oder Profilrippen. Es ist durchaus üblich, dass solche Vulkanisationsformen in den den Laufstreifenbereich ausformenden Formteilen zwischen 4.000 und 5.000 Entlüftungsbohrungen mit Entlüftungseinheiten enthalten.

Insbesondere bei Fahrzeugluftreifen, die in nordischen Ländern als sogenannte Nordic-Reifen im Winter vor allem auf eis- und schneebedeckten Fahrbahnen für gute Griffeigenschaften sorgen sollen, ist es wesentlich, dass auch die Positivfläche des Laufstreifens für eine gute Haftung zum Untergrund sorgt. Nachdem bei solchen Reifen die Abdrücke der Ventilteller, wie erwähnt, einen relativ großen Anteil an der Positivfläche einnehmen, kommt dem Flächenanteil der Abdrücke der Ventilteller eine nicht zu unterschätzende Bedeutung zu. Die aus der DE 10 2019 205 371 A1 bekannten Entlüftungseinheiten erzeugen zwar Abdrücke im Laufstreifen, welche die Schnee- und Eisperformance durch die geringe Rauheit etwas verbessern helfen, der erzielbare Effekt hat sich jedoch als wenig wirksam herausgestellt.

Der Erfindung liegt somit die Aufgabe zugrunde, eine Entlüftungseinheit der eingangs genannten Art zur Verfügung zu stellen, welche bei der Vulkanisation eines Reifens am Laufstreifen Abdrücke einprägt, die gegenüber dem erwähnten Stand der Technik eine deutliche Verbesserung der Schnee- und Eisperformance bewirken können.

Gelöst wird die gestellte Aufgabe bezüglich der Entlüftungseinheit erfindungsgemäß dadurch, dass die Oberseite des Ventiltellers eine flächendeckende, ungleichmäßige Berg-Tal-Struktur mit einer flächenbezogenen mittleren Rauheit Sa nach DIN EN ISO 25178 von 0,20 mm bis 0,60 mm und einer maximalen Höhendifferenz Sz gemäß DIN EN ISO 25178 von 0,20 mm bis 0,85 mm aufweist, wobei sich die tiefsten Stellen von Tal-Strukturen auf oder über dem Niveau der Basisfläche befinden, wobei die Berg-Tal-Struktur mit einer ersten Höhenfläche, welche parallel zur und deckungsgleich mit der Basisfläche verläuft und sich gegenüber der Basisfläche in einer Höhe von 0,20 mm befindet, eine Schnittfläche bildet, welche 55 % bis 75 % der Fläche der ersten Höhenfläche einnimmt.

Gemäß der Erfindung ist die Struktur bzw. Rauheit der Oberseite des Ventiltellers an die Oberflächenrauheit von Eisoberflächen auf Fahrbahnen angelehnt bzw. angepasst. Dadurch sind einerseits die Oberseiten der Ventilteller wesentlich rauer als jene aus dem Stand der Technik gemäß der DE 10 2019 205 371 A1 und andererseits entspricht die Berg-Tal-Struktur weitgehend jener, wie sie bei natürlichen Eisoberflächen vorliegt. Solche Ventiltelleroberseiten prägen bei der Vulkanisation des Reifens auf der Reifenoberfläche gegengleich ausgestaltete Strukturen ein, sodass auf der Positivfläche des Laufstreifens eines derart vulkanisierten Fahrzeugluftreifens die Ventiltellerabdrücke eine für einen optimalen Eisgriff besonders vorteilhaft gestaltete Struktur aufweisen, die eine besonders wirkungsvolle Performance des Reifens nicht nur auf Eis sondern auch auf schneeigen Fahrbahnen bewirkt.

Bei einer bevorzugten Ausführung beträgt die flächenbezogene mittlere Rauheit Sa der Berg-Tal-Struktur der Oberseite des Ventiltellers gemäß DIN EN ISO 25178 0,20 mm bis 0,30 mm. Zur Nachbildung von weit verbreiteten Eisstrukturen vereister Fahrbahnoberflächen ist bei dieser Rauheit eine maximale Höhendifferenz Sz der Berg-Tal-Struktur von 0,80 mm bis 0,85 mm besonders geeignet.

Bei einer weiteren bevorzugten Ausführung beträgt die flächenbezogene mittlere Rauheit Sa der Berg-Tal-Struktur der Oberseite des Ventiltellers gemäß DIN EN ISO 25178 0,40 mm bis 0,60 mm. Mit dieser Rauheit lassen sich rauerer Eisstrukturen vor allem dann gut nachbilden, wenn die maximale Höhendifferenz Sz der Berg-Tal-Struktur der Oberseite des Ventiltellers gemäß DIN EN ISO 25178 2,00 mm bis 2,25 mm beträgt.

Die flächendeckenden unregelmäßigen Berg-Tal-Strukturen können durch Schnittflächen mit weiteren Höhenflächen gut charakterisiert werden.

Mit einer zweiten Höhenfläche, welche parallel zur und deckungsgleich mit der Basisfläche verläuft und sich gegenüber der Basisfläche in einer Höhe von 0,50 mm befindet, bildet die Berg-Tal-Struktur bevorzugt eine Schnittfläche, welche 1,5 % bis 50 % der Fläche der zweiten Höhenfläche einnimmt.

Mit einer dritten Höhenfläche, welche parallel zur und deckungsgleich mit der Basisfläche verläuft und sich gegenüber der Basisfläche in einer Höhe von 1,00 mm befindet, bildet die Berg-Tal-Struktur bevorzugt eine Schnittfläche, welche 0 % bis 10 % der Fläche der dritten Höhenfläche einnimmt. Darüber hinaus kann die Ausgestaltung der Berg-Tal-Struktur derart sein, dass sie mit einer vierten Höhenfläche, welche parallel zur und deckungsgleich mit der Basisfläche verläuft und sich gegenüber der Basisfläche in einer Höhe von 1,80 mm befindet, eine Schnittfläche bildet, welche 0,2 % bis 0,5 % der Fläche der Höhenfläche einnimmt. Die vierte Höhenfläche wird daher bei einer derartigen Ausgestaltung lediglich von einigen wenigen Bergspitzen überragt.

Bei einer Ausführung der Oberseite des Ventiltellers mit geringerer Rauheit und einer geringeren maximalen Höhendifferenz Sz der Berg-Tal-Struktur, wie oben erwähnt, weist der Ventilteller bevorzugt eine Oberseite auf, bei welcher die Schnittfläche mit der ersten Höhenfläche 55 % bis 65 % der Fläche der ersten Höhenfläche, die Schnittfläche mit der zweiten Höhenfläche 1,5 % bis 3 % der Fläche der zweiten Höhenfläche und die Schnittfläche mit der dritten Höhenfläche 0,5 % bis 1 % der Fläche der dritten Höhenfläche beträgt, wobei oberhalb der dritten Höhenfläche keine Schnittfläche mehr vorhanden ist.

Bei einer raueren Ausgestaltung der Oberseite des Ventiltellers wird die Berg-Tal-Struktur bevorzugt derart gestaltet, dass die Schnittfläche mit der ersten Höhenfläche 65 % bis 75 % der Fläche der ersten Höhenfläche, die Schnittfläche mit der zweiten Höhenfläche 40 % bis 50 % der Fläche der zweiten Höhenfläche, die Schnittfläche mit der dritten Höhenfläche 6 % bis 10 % der Fläche der dritten Höhenfläche und die Schnittfläche mit der vierten Höhenfläche 0,5 % bis 1 % der Fläche der vierten Höhenfläche beträgt.

Die flächendeckenden, ungleichmäßigen Berg-Tal-Strukturen lassen sich in weitgehend "naturgetreuer" Nachbildung von Eisstrukturen auf den Basisflächen von Ventiltellern durch ein additives Verfahren, insbesondere SLM (selektives Laserschmelzen), aufbauen.

Die Erfindung wird in Bezug auf die Vulkanisationsform für einen Fahrzeugluftreifen dadurch gelöst, dass diese zumindest eine Entlüftungseinheit aufweist, welche nach einer oder mehreren der vorher genannten Ausführungsform(en) ausgebildet ist. Besonders vorteilhaft ist es dabei, wenn die Vulkanisationsform Entlüftungseinheiten enthält, die mit unterschiedlich gestalteten Berg-Tal-Strukturen ausgeführte Ventiltelleroberseiten aufweisen. Eine derartige Vulkanisationsform erzeugt auf unterschiedliche Weise ausgestaltete geprägte Strukturen im Laufstreifen, die sich auch auf besonders vorteilhafte Weise auf die Eis- und Schneeperformance des Fahrzeugluftreifens auswirken.

In Bezug auf den Fahrzeugluftreifen wird die Aufgabe dadurch gelöst, dass dieser mit einer vorbeschriebenen Vulkanisationsform vulkanisiert ist und dass der Reifen kreisförmige Abdrücke bzw. Einprägungen der Ventilteller von Entlüftungseinheiten zumindest auf seiner Laufstreifenoberfläche aufweist, welche eine flächendeckende, ungleichmäßige Berg-Tal-Struktur mit einer flächenbezogenen mittleren Rauheit Sa nach DIN EN ISO 25178 und einer maximalen Höhendifferenz Sz gemäß DIN EN ISO 25178 aufweisen,
wobei die flächenbezogene mittlere Rauheit Sa der kreisförmigen Abdrücke bzw. Einprägungen 0,20 mm bis 0,30 mm und die maximale Höhendifferenz Sz 0,80 mm bis 0,85 mm beträgt oder
wobei die flächenbezogene mittlere Rauheit Sa der kreisförmigen Abdrücke bzw. Einprägungen 0,40 mm bis 0,60 mm und die maximale Höhendifferenz Sz 2,00 mm bis 2,25 mm beträgt.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Draufsicht auf einen Ausschnitt eines Formsegmentes eines Segmentringes zum Ausformen der Laufstreifenprofilierung eines Fahrzeugluftreifens,
Fig. 2 einen Längsschnitt einer Ausführungsvariante einer Entlüftungseinheit,
Fig. 3 eine vergrößerte Schrägansicht des Ventiltellers der in Fig. 2 gezeigten Entlüftungseinheit und
Fig. 4 und Fig. 5 Ansichten von Ausschnitten beispielhafter Berg-Tal-Strukturen auf Oberseiten von Ventiltellern.

Eine Vulkanisationsform für einen Fahrzeugluftreifen weist üblicherweise einen in Formsegmente gegliederten Segmentring zum Ausformen des Laufstreifenbereiches und der Laufstreifenprofilierung des Fahrzeugluftreifens auf. Bei Fahrzeugluftreifen, die vorrangig für den Einsatz unter winterlichen Fahrbedingungen, daher insbesondere auf eisigen oder mit Schnee bedeckten Fahrbahnen, geeignet und vorgesehen sind, ist die Innenseite der Formsegmente üblicherweise mit einer Vielzahl von Lamellen, welche Einschnitte mit einer Breite von insbesondere 0,40 mm bis 1,00 mm und/oder Mikroeinschnitte mit einer Breite von 0,10 mm bis 0,30 mm im Laufstreifen ausformen, versehen.

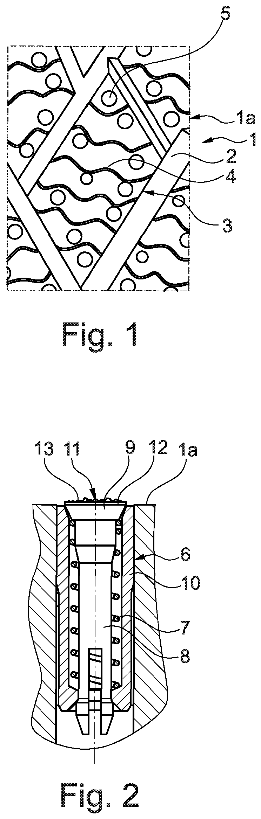

Fig. 1 zeigt beispielhaft einen Ausschnitt der Formsegmentinnenseite 1a eines solchen Formsegmentes 1 mit Stegen 2, die Rillen im Laufstreifen ausformen und beim gezeigten Ausführungsbeispiel ein Flächenelement 3 an der Formsegmentinnenseite 1a umlaufen, welches einen Profilblock im Laufstreifen ausformt. Innerhalb des Flächenelementes 3 befindet sich eine Vielzahl von - im gezeigten Beispiel sechs - Lamellen 4, welche beispielsweise Stahlblechteile sind, die im Formsegment 1 verankert sind oder welche durch SLM (Selektives Laserschmelzen) unmittelbar auf dem Formsegment 1 aufgebaute Teile sind. Wie Fig. 1 zeigt, weist ein derartiges Formsegment 1, in den Bereichen zwischen den Lamellen 4, eine Vielzahl von Löchern bzw. Bohrungen 5 auf, in welche von der Außen- bzw. Rückseite des Formsegmentes 1 her Entlüftungseinheiten 6 (Fig. 2) eingesetzt werden.

Fig. 2 zeigt eine Ausführungsform einer Entlüftungseinheit 6. Bestandteil der Entlüftungseinheit 6 ist ein von einer Feder 7 beaufschlagter Ventilschaft 8 mit einem in Draufsicht kreisförmigen Ventilteller 9. Der Ventilteller 9 weist eine äußere Oberseite 11 mit einer Basisfläche 12 auf, welche im geschlossenen Zustand der Entlüftungseinheit 6 mit der Formsegmentinnenseite 1a eine einheitliche oder (infolge von Fertigungstoleranzen) weitgehend einheitliche Fläche bildet. Im gezeigten Beispiel ist die Feder 7 eine den Ventilschaft 8 umgebende Schraubendruckfeder. Zu den weiteren Bestandteilen der Entlüftungseinheit 6 gehören ein Gehäuse 10, welches derart gestaltet ist, dass die den Ventilschaft 8 umgebende Feder 7 sich mit ihrem einen Ende am Gehäuse 10 innen abstützt. Das zweite Ende der Feder 7 beaufschlagt den Ventilschaft 8 bzw. den Ventilteller 9 innerhalb des Gehäuses 10 derart, dass in der nicht dargestellten geöffneten Lage der Entlüftungseinheit 6 der Ventilteller 9 geringfügig über die Formsegmentinnenseite 1a übersteht, sodass die beim Einformen eines Reifenrohlings aus der Vulkanisationsform abzuführende Luft durch den Spalt zwischen dem Ventilteller 9 und dem Gehäuse 10 abgeführt werden kann. Ist der Reifen schlussendlich in der Vulkanisationsform eingeformt, verschließt der Ventilteller 9 den erwähnten Spalt. Die Oberseite 11 des Ventiltellers 9 ist flächendeckend mit einer ungleichmäßigen und dreidimensional ausgebildeten Berg-Tal-Struktur 13 versehen, die im geschlossenen Zustand der Entlüftungseinheit 6 über die Formsegmentinnenseite 1a übersteht.

Die Ausgestaltung des Ventilschaftes 8 kann dem bekannten Stand der Technik entsprechen, insbesondere sorgen Vorsprünge am inneren Ende des Ventilschaftes 8 dafür, dass der Ventilschaft 8 unter dem Druck der Feder 7 nicht aus dem Gehäuse 10 entweichen kann.

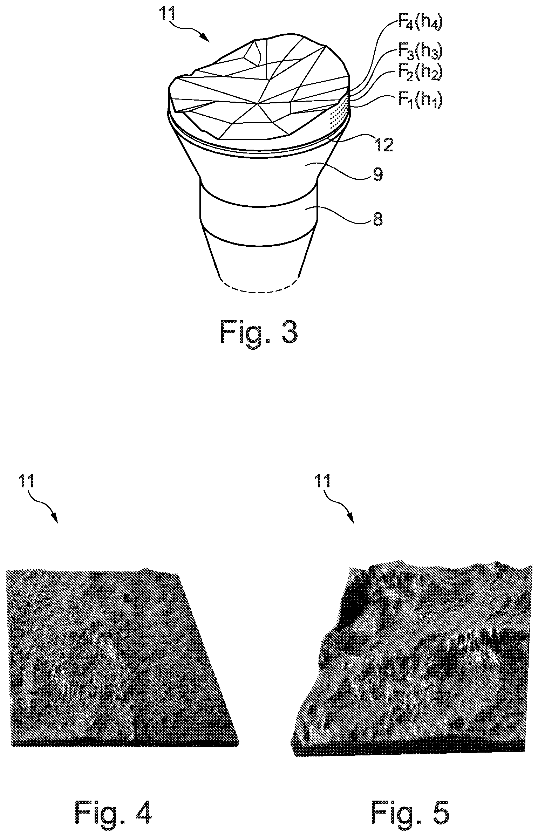

Fig 4 und Fig. 5 zeigen bevorzugte Ausgestaltungen von Berg-Tal-Strukturen 13 an der Oberseite 11 des Ventiltellers 9, Fig. 5 einer mehr rauen Eisfläche nachgebildet, Fig. 4 einer weniger rauen Eisfläche nachgebildet.

Die Gestaltung der Berg-Tal-Strukturen 13 wird nun anhand von Höhenflächen F₁, F₂, F₃ und F₄ betrachtet, die in Fig. 3 nicht maßstabsgetreu angedeutet sind. Die Höhenflächen F₁, F₂, F₃ und F₄ erstrecken sich parallel zur Basisfläche 12, weisen deren Kreisform und deren Flächeninhalt auf und schneiden die Berg-Tal-Struktur 13 in verschiedenen, gegenüber der Basisfläche 12 ermittelten Höhen h₁ (Höhenfläche F₁), h₂ (Höhenfläche F₂), h₃ (Höhenfläche F₃) und h₄ (Höhenfläche F₄). Jede Höhenfläche F₁, F₂, F₃ und F₄ weist daher einen oder mehrere Flächenbereich(e) auf, in welchem bzw. in welchen die Höhenfläche F₁, F₂, F₃ und F₄ von der Berg-Tal-Struktur 13 durchragt ist. Dieser bzw. diese Flächenbereich(e) bildet bzw. bilden eine insbesondere mehrmals unterbrochene Schnittfläche, welche Bestandteil der jeweilige Höhenfläche F₁, F₂, F₃ und F₄ ist. Die Höhe h₁ beträgt 0,20 mm, die Höhe h₂ 0,50 mm, die Höhe h₃ 1,00 mm und die Höhe h₄ 1,80 mm.

Die Ausgestaltung der Berg-Tal-Struktur 13 ist derart, dass die Schnittfläche in der Höhenfläche F₁ 55 % bis 75% des Flächeninhaltes der Höhenfläche F₁ einnimmt, die Schnittfläche in der Höhenfläche F₂ nimmt 1,5% bis 50% des Flächeninhaltes der Höhenfläche F₂ ein und die Schnittfläche in der Höhenfläche F₃ nimmt 0% bis 10% des Flächeninhaltes der Höhenfläche F₃ ein. Bei besonders rauen Berg-Tal-Strukturen können auch in der Höhenfläche F₄ Bergspitzenbereiche vorhanden sein, sodass dann die Schnittfläche in der Höhenfläche F₄ 0,2% bis 0,5% beträgt.

Bei einer geringer rauen Oberseite 11 wie in Fig. 4 gezeigt, gelten für die Berg-Tal-Struktur 13 folgende Parameter:
Schnittfläche in F₁: 55% bis 65% der Fläche F₁
Schnittfläche in F₂: 1,5% bis 3% der Fläche F₂
Schnittfläche in F₃: 0,5% bis 1% der Fläche F₃
Keine Schnittflächen oberhalb von F₃
Mittlere arithmetische und flächenbezogene Rauheit Sa gemäß DIN EN ISO 25178 (in der zum Anmeldezeitpunkt dieser Anmeldung geltenden Fassung): 0,20 mm bis 0,30 mm.
Maximale Höhendifferenz Sz gemäß DIN EN ISO 25178 (Tiefe tiefsten Tal zu Spitze höchstem Berg): 0,80 mm bis 0,85 mm.

Bei einer besonders rauen Oberseite 11 wie in Fig. 5 gezeigt, gelten für die Berg-Tals-Struktur 13 folgende Parameter:
Schnittfläche in F₁: 65% bis 75% der Fläche F₁
Schnittfläche in F₂: 40% bis 50% der Fläche F₂
Schnittfläche in F₃: 6% bis 10% der Fläche F₃
Schnittfläche in F₄: 0,5% bis 1,0% der Fläche F₄
Mittlere arithmetische und flächenbezogene Rauheit Sa gemäß DIN EN ISO 25178 (in der zum Anmeldezeitpunkt dieser Anmeldung geltenden Fassung): 0,40 mm bis 0,60 mm.
Maximale Höhendifferenz Sz gemäß DIN EN ISO 25178 (Tiefe tiefsten Tal zu Spitze höchstem Berg): 2,00 mm bis 2,25 mm.

Die Berg-Tal-Strukturen 13 entsprechen bezüglich ihrer Ausgestaltung weitgehend typischen Oberflächenstrukturen von Eisoberflächen auf Fahrbahnen. Zur "Nachbildung" wurde die Rauheit verschieden rauer, insbesondere besonders rauer und weniger rauer, Flächenelemente von Eisoberflächen auf Fahrbahnen berührungslos gemessen und in 3D-Daten, insbesondere unter Verwendung von CAD-Systemen, umgewandelt.

Die ungleichmäßigen Berg-Tal-Strukturen 13 an den Oberseiten 11 der Ventilteller 9 werden durch additive Verfahren, insbesondere durch SLM (Selektives Laserschmelzen) hergestellt. Das Aufbringen der Struktur erfolgt softwaregesteuert unmittelbar auf die ebene Basisfläche 12 der Oberseite 11 des metallischen, etwa aus Stahl, hergestellten Ventiltellers 9, indem ein Metallpulver Schicht für Schicht aufgebracht und Schicht für Schicht geschmolzen wird, wodurch die dreidimensionale Struktur der Oberseite 11 fest mit dem Ventilteller 9 verbunden wird. Die Generierung der einzelnen Schichten zur Nachbildung einer Eisoberfläche erfolgt unter Anwendung der erwähnten 3D-Daten, die von Eisoberflächen abgenommen worden sind.

In einem Formsegment bzw. einem aus Formsegmenten zusammengesetzten Profilring zur Ausformung des profilierten Laufstreifens können Entlüftungseinheiten 6 eingesetzt werden, deren Ventilteller 9 entweder sämtlich gleich gestaltete Oberseiten 11 oder unterschiedlich gestaltete Oberseiten 11 aufweisen.

Die Oberseiten 11 der Ventilteller 9 hinterlassen auf den Reifenoberflächen, daher auf den Laufstreifenoberflächen, gegengleiche Abdrücke bzw. Einprägungen, die für eine besonders wirkungsvolle Schnee- und Eisperformance sorgen. Die gesetzten Maßnahmen sind vor allem bei neuen Reifen besonders vorteilhaft. Mit fortschreitendem Laufstreifenabrieb verschwinden diese besonders gestalteten Strukturen und es stellt sich jene Rauheit am Laufstreifen ein, wie sie im abgefahrenen Zustand durch Abrieb entsteht.

### Bezugszeichenliste

- 1: Formsegment
- 1a: Formsegmentinnenseite
- 2: Steg
- 3: Flächenelement
- 4: Lamelle
- 5: Bohrung
- 6: Entlüftungseinheit
- 7: Feder
- 8: Ventilschaft
- 9: Ventilteller
- 10: Gehäuse
- 11: Oberseite
- 12: Basisfläche
- 13: Berg-Tal-Struktur
- F₁, F₂, F₃, F₄: Höhenfläche
- h₁, h₂, h₃, h₄: Höhe

## Patentansprüche

1. Entlüftungseinheit (6) für eine Vulkanisationsform eines Fahrzeugluftreifens mit Formsegmenten (1) mit je einer Forminnenseite (1a), einem in eine Bohrung (5) eines Formsegmentes (1) einpressbaren Gehäuse (10) und einem im Gehäuse (10) positionierten und gegenüber diesem unter Federkraft stehendem, beweglichen Ventileinsatz mit einem Ventilschaft (8) und einem Ventilteller (9), welcher eine dem zu vulkanisierenden Rohreifen zugewandte Oberseite (11) aufweist, wobei der Ventilteller (9) während des Einformvorganges des Rohreifens mit der Oberfläche des Rohreifens in Kontakt kommt und eine ebene Basisfläche (12) aufweist, die im geschlossenen Zustand der Entlüftungseinheit (6) mit der Forminnenseite (1a) eine einheitliche Fläche bildet,
**dadurch gekennzeichnet,**
**dass** die Oberseite (11) des Ventiltellers (9) eine flächendeckende, ungleichmäßige Berg-Tal-Struktur (13) mit einer flächenbezogenen mittleren Rauheit Sa nach DIN EN ISO 25178 von 0,20 mm bis 0,60 mm und einer maximalen Höhendifferenz Sz gemäß DIN EN ISO 25178 von 0,20 mm bis 2,25 mm aufweist, wobei sich die tiefsten Stellen von Tal-Strukturen auf oder über dem Niveau der Basisfläche (12) befinden, wobei die Berg-Tal-Struktur (13) mit einer ersten Höhenfläche (F₁), welche parallel zur und deckungsgleich mit der Basisfläche (12) verläuft und sich gegenüber der Basisfläche (12) in einer Höhe (h₁) von 0,20 mm befindet, eine Schnittfläche bildet, welche 55 % bis 75 % der Fläche der ersten Höhenfläche (F₁) einnimmt.

2. Entlüftungseinheit nach Anspruch 1, **dadurch gekennzeichnet, dass** die flächenbezogene mittlere Rauheit Sa der Berg-Tal-Struktur (13) der Oberseite (11) des Ventiltellers (9) gemäß DIN EN ISO 25178 0,20 mm bis 0,30 mm beträgt.

3. Entlüftungseinheit nach Anspruch 1 oder 2, **dadurch gekennzeichnet, dass** die maximale Höhendifferenz Sz der Berg-Tal-Struktur (13) der Oberseite (11) des Ventiltellers (9) gemäß DIN EN ISO 25178 0,80 mm bis 0,85 mm beträgt.

4. Entlüftungseinheit nach Anspruch 1, **dadurch gekennzeichnet, dass** die flächenbezogene mittlere Rauheit Sa der Berg-Tal-Struktur (13) der Oberseite (11) des Ventiltellers (9) gemäß DIN EN ISO 25178 0,40 mm bis 0,60 mm beträgt.

5. Entlüftungseinheit nach Anspruch 1 oder Anspruch 4, **dadurch gekennzeichnet, dass** die maximale Höhendifferenz Sz der Berg-Tal-Struktur (13) der Oberseite (11) des Ventiltellers (9) gemäß DIN EN ISO 25178 2,00 mm bis 2,25 mm beträgt.

6. Entlüftungseinheit nach einem der Ansprüche 1 bis 5, **dadurch gekennzeichnet, dass** die Berg-Tal-Struktur (13) mit einer zweiten Höhenfläche (F₂), welche parallel zur und deckungsgleich mit der Basisfläche (12) verläuft und sich gegenüber der Basisfläche (12) in einer Höhe (h₂) von 0,50 mm befindet, eine Schnittfläche bildet, welche 1,5 % bis 50 % der Fläche der zweiten Höhenfläche (F₂) einnimmt.

7. Entlüftungseinheit nach einem der Ansprüche 1 bis 6, **dadurch gekennzeichnet, dass** die Berg-Tal-Struktur (13) mit einer dritten Höhenfläche (F₃), welche parallel zur und deckungsgleich mit der Basisfläche (12) verläuft und sich gegenüber der Basisfläche (12) in einer Höhe (h₃) von 1,00 mm befindet, eine Schnittfläche bildet, welche 0 % bis 10 % der Fläche der dritten Höhenfläche (F₃) einnimmt.

8. Entlüftungseinheit nach einem der Ansprüche 1 bis 7, **dadurch gekennzeichnet, dass** die Berg-Tal-Struktur (13) mit einer vierten Höhenfläche (F₄), welche parallel zur und deckungsgleich mit der Basisfläche (12) verläuft und sich gegenüber der Basisfläche (12) in einer Höhe (h₄) von 1,80 mm befindet, eine Schnittfläche bildet, welche 0,2 % bis 0,5 % der Fläche der Höhenfläche (F₄) einnimmt.

9. Entlüftungseinheit nach den Ansprüchen 1, 6 und 7, **dadurch gekennzeichnet, dass** der Ventilteller (9) eine Oberseite (11) aufweist, bei welcher die Schnittfläche mit der ersten Höhenfläche (F₁) 55% bis 65% der Fläche der ersten Höhenfläche (F₁), die Schnittfläche mit der zweiten Höhenfläche (F₂) 1,5 % bis 3 % der Fläche der zweiten Höhenfläche (F₂) und die Schnittfläche mit der dritten Höhenfläche (F₃) 0,5 % bis 1 % der Fläche der dritten Höhenfläche (F₃) beträgt, wobei oberhalb der dritten Höhenfläche (F₃) keine Schnittfläche mehr vorhanden ist.

10. Entlüftungseinheit nach den Ansprüchen 1, 6, 7 und 8, **dadurch gekennzeichnet, dass** der Ventilteller (9) eine Oberseite (11) aufweist, bei welcher die Schnittfläche mit der ersten Höhenfläche (F₁) 65% bis 75% der Fläche der ersten Höhenfläche (F₁), die Schnittfläche mit der zweiten Höhenfläche (F₂) 40 % bis 50 % der Fläche der zweiten Höhenfläche (F₂), die Schnittfläche mit der dritten Höhenfläche (F₃) 6 % bis 10 % der Fläche der dritten Höhenfläche (F₃) und die Schnittfläche mit der vierten Höhenfläche (F₄) 0,5 % bis 1,0 % der Fläche der vierten Höhenfläche (F₄) beträgt.

11. Entlüftungseinheit nach einem der Ansprüche 1 bis 10, **dadurch gekennzeichnet, dass** die Berg-Tal-Struktur (13) der Oberseite (11) des Ventiltellers (9) durch ein additives Verfahren, insbesondere SLM (selektives Laserschmelzen), auf der Basisfläche (12) des Ventiltellers (9) aufgebaut worden ist.

12. Vulkanisationsform für einen Fahrzeugluftreifen, **dadurch gekennzeichnet, dass** diese zumindest eine Entlüftungseinheit (6) aufweist, welche nach einem oder mehreren der vorangehenden Ansprüche ausgebildet ist.

13. Fahrzeugluftreifen, **dadurch gekennzeichnet, dass** dieser mit einer Vulkanisationsform gemäß Anspruch 12 vulkanisiert ist, wobei der Reifen kreisförmige Abdrücke bzw. Einprägungen der Ventilteller (9) von Entlüftungseinheiten (6) zumindest auf seiner Laufstreifenoberfläche aufweist, welche eine flächendeckende, ungleichmäßige Berg-Tal-Struktur mit einer flächenbezogenen mittleren Rauheit Sa nach DIN EN ISO 25178 und einer maximalen Höhendifferenz Sz gemäß DIN EN ISO 25178 aufweisen,
wobei die flächenbezogene mittlere Rauheit Sa der kreisförmigen Abdrücke bzw. Einprägungen 0,20 mm bis 0,30 mm und die maximale Höhendifferenz Sz 0,80 mm bis 0,85 mm beträgt oder
wobei die flächenbezogene mittlere Rauheit Sa der kreisförmigen Abdrücke bzw. Einprägungen 0,40 mm bis 0,60 mm und die maximale Höhendifferenz Sz 2,00 mm bis 2,25 mm beträgt.

## Claims

1. Ventilation unit (6) for a vulcanization mould of a pneumatic vehicle tyre with mould segments (1) each with a mould inner side (1a), a housing (10) which can be pressed into a bore (5) of a mould segment (1), and a movable valve insert which is positioned in the housing (10) and is under spring force with respect thereto and which has a valve stem (8) and a valve disc (9) which has an upper side (11) facing the green tyre to be vulcanized, wherein the valve disc (9) comes into contact with the surface of the green tyre during the moulding process of the green tyre and has a planar base surface (12) which, in the closed state of the ventilation unit (6), forms a uniform surface with the mould inner side (1a),
**characterized**
**in that** the upper side (11) of the valve disc (9) has a surface-covering, uneven crest-trough structure (13) with a surface-related mean roughness Sa according to DIN EN ISO 25178 of from 0.20 mm to 0.60 mm and a maximum height difference Sz according to DIN EN ISO 25178 of from 0.20 mm to 2.25 mm, wherein the deepest points of trough structures are located at or above the level of the base surface (12), wherein the crest-trough structure (13) forms, with a first height surface (F₁) which runs parallel to and congruent with the base surface (12) and is at a height (h₁) relative to the base region (12) of 0.20 mm, an intersectional area which occupies from 55% to 75% of the area of the first height surface (F₁).

2. Ventilation unit according to Claim 1, **characterized in that** the surface-related mean roughness Sa of the crest-trough structure (13) of the upper side (11) of the valve disc (9) according to DIN EN ISO 25178 is from 0.20 mm to 0.30 mm.

3. Ventilation unit according to Claim 1 or 2, **characterized in that** the maximum height difference Sz of the crest-trough structure (13) of the upper side (11) of the valve disc (9) according to DIN EN ISO 25178 is from 0.80 mm to 0.85 mm.

4. Ventilation unit according to Claim 1, **characterized in that** the surface-related mean roughness Sa of the crest-trough structure (13) of the upper side (11) of the valve disc (9) according to DIN EN ISO 25178 is from 0.40 mm to 0.60 mm.

5. Ventilation unit according to Claim 1 or Claim 4, **characterized in that** the maximum height difference Sz of the crest-trough structure (13) of the upper side (11) of the valve disc (9) according to DIN EN ISO 25178 is from 2.00 mm to 2.25 mm.

6. Ventilation unit according to one of Claims 1 to 5, **characterized in that** the crest-trough structure (13) forms, with a second height surface (F₂) which runs parallel to and congruent with the base surface (12) and is at a height (h₂) relative to the base surface (12) of 0.50 mm, an intersectional area which occupies from 1.5% to 50% of the area of the second height surface (F₂).

7. Ventilation unit according to one of Claims 1 to 6, **characterized in that** the crest-trough structure (13) forms, with a third height surface (F₃) which runs parallel to and congruent with the base surface (12) and is at a height (h₃) relative to the base surface (12) of 1.00 mm, an intersectional area which occupies from 0% to 10% of the area of the third height surface (F₃).

8. Ventilation unit according to one of Claims 1 to 7, **characterized in that** the crest-trough structure (13) forms, with a fourth height surface (F₄) which runs parallel to and congruent with the base surface (12) and is at a height (h₄) relative to the base surface (12) of 1.80 mm, an intersectional area which occupies from 0.2% to 0.5% of the area of the third height surface (F₄).

9. Ventilation unit according to Claims 1, 6 and 7, **characterized in that** the valve disc (9) has an upper side (11), in which the intersectional area with the first height surface (F₁) is from 55% to 65% of the area of the first height surface (F₁), the intersectional area with the second height surface (F₂) is from 1.5% to 3% of the area of the second height surface (F₂), and the intersectional area with the third height surface (F₃) is from 0.5% to 1% of the area of the third height surface (F₃), wherein there is no longer an intersectional area above the third elevation area (F₃).

10. Ventilation unit according to Claims 1, 6, 7 and 8, **characterized in that** the valve disc (9) has an upper side (11), in which the intersectional area with the first height surface (F₁) is from 65% to 75% of the area of the first height surface (F₁), the intersectional area with the second height surface (F₂) is from 40% to 50% of the area of the second height surface (F₂), the intersectional area with the third height surface (F₃) is from 6% to 10% of the area of the third height surface (F₃), and the intersectional area with the fourth height surface (F₄) is from 0.5% to 1.0% of the area of the fourth height surface (F₄).

11. Ventilation unit according to one of Claims 1 to 10, **characterized in that** the crest-trough structure (13) of the upper side (11) of the valve disc (9) has been built on the base surface (12) of the valve disc (9) by an additive method, in particular SLM (selective laser melting).

12. Vulcanization mould for a pneumatic vehicle tyre, **characterized in that** it has at least one ventilation unit (6) which is designed according to one or more of the preceding claims.

13. Pneumatic vehicle tyre, **characterized in that** it is vulcanized with a vulcanization mould according to Claim 12, wherein the tyre has circular imprints or indentations of the valve disc (9) of ventilation units (6) at least on its tread surface, which have an extensive, non-uniform crest-trough structure with an area-related mean roughness Sa according to DIN EN ISO 25178 and a maximum height difference Sz according to DIN EN ISO 25178,
wherein the area-related mean roughness Sa of the circular imprints or indentations is from 0.20 mm to 0.30 mm and the maximum height difference Sz is from 0.80 mm to 0.85 mm, or
wherein the area-related mean roughness Sa of the circular imprints or indentations is from 0.40 mm to 0.60 mm and the maximum height difference Sz is from 2.00 mm to 2.25 mm.

## Revendications

1. Unité de ventilation (6) pour un moule de vulcanisation d'un pneumatique de véhicule, comportant des segments de moule (1) présentant chacun un côté intérieur de moule (1a), un boîtier (10) pouvant être enfoncé dans un alésage (5) d'un segment de moule (1) et un insert de soupape mobile positionné dans le boîtier (10) et soumis à une force élastique par rapport à celui-ci, avec une tige de soupape (8) et un disque de soupape (9) qui présente un côté supérieur (11) tourné vers le pneu brut à vulcaniser, le disque de soupape (9) entrant en contact avec la surface du pneu brut pendant le processus de moulage du pneu brut et présentant une surface de base plane (12) qui, à l'état fermé de l'unité de ventilation (6) forme une surface uniforme avec le côté intérieur de moule (1a),
**caractérisée**
**en ce que** le côté supérieur (11) du disque de soupape (9) présente une structure irrégulière en reliefs et creux (13) couvrant toute la surface, avec une rugosité moyenne Sa rapportée à la surface selon la norme DIN EN ISO 25178 de 0,20 mm à 0,60 mm et une différence de hauteur maximale Sz selon la norme DIN EN ISO 25178 de 0,20 mm à 2,25 mm, les points les plus bas des structures en creux se trouvant au niveau ou au-dessus du niveau de la surface de base (12), la structure en reliefs et creux (13) formant, avec une première surface de hauteur (F₁) qui s'étend parallèlement à la surface de base (12) et qui coïncide avec celle-ci et qui se trouve à une hauteur (h₁) de 0,20 mm par rapport à la surface de base (12), une surface d'intersection qui occupe 55 % à 75 % de la surface de la première surface de hauteur (F₁).

2. Unité de ventilation selon la revendication 1, **caractérisée en ce que** la rugosité moyenne rapportée à la surface Sa de la structure en reliefs et creux (13) du côté supérieur (11) du disque de soupape (9) est de 0,20 mm à 0,30 mm selon la norme DIN EN ISO 25178.

3. Unité de ventilation selon la revendication 1 ou 2, **caractérisée en ce que** la différence de hauteur maximale Sz de la structure en reliefs et creux (13) du côté supérieur (11) du disque de soupape (9) est de 0,80 mm à 0,85 mm selon la norme DIN EN ISO 25178.

4. Unité de ventilation selon la revendication 1, **caractérisée en ce que** la rugosité moyenne rapportée à la surface Sa de la structure en reliefs et creux (13) du côté supérieur (11) du disque de soupape (9) est de 0,40 mm à 0,60 mm selon la norme DIN EN ISO 25178.

5. Unité de ventilation selon la revendication 1 ou la revendication 4, **caractérisée en ce que** la différence de hauteur maximale Sz de la structure en reliefs et creux (13) du côté supérieur (11) du disque de soupape (9) est de 2,00 mm à 2,25 mm selon la norme DIN EN ISO 25178.

6. Unité de ventilation selon l'une quelconque des revendications 1 à 5, **caractérisée en ce que** la structure en reliefs et creux (13) forme avec une deuxième surface de hauteur (F₂) qui s'étend parallèlement à la surface de base (12) et coïncide avec celle-ci et qui, par rapport à la surface de base (12), se trouve à une hauteur (h₂) de 0,50 mm, une surface d'intersection qui occupe 1,5 % à 50 % de la surface de la deuxième surface de hauteur (F₂).

7. Unité de ventilation selon l'une quelconque des revendications 1 à 6, **caractérisée en ce que** la structure en reliefs et creux (13) forme avec une troisième surface de hauteur (F₃) qui s'étend parallèlement à la surface de base (12) et coïncide avec celle-ci et qui, par rapport à la surface de base (12), se trouve à une hauteur (h₃) de 1,00 mm, une surface d'intersection qui occupe 0 % à 10 % de la surface de la troisième surface de hauteur (F₃).

8. Unité de ventilation selon l'une quelconque des revendications 1 à 7, **caractérisée en ce que** la structure en reliefs et creux (13) forme avec une quatrième surface de hauteur (F₄) qui s'étend parallèlement à la surface de base (12) et coïncide avec celle-ci et qui, par rapport à la surface de base (12), se trouve à une hauteur (h₄) de 1,80 mm, une surface d'intersection qui occupe 0,2 % à 0,5 % de la surface de la surface de hauteur (F₄).

9. Unité de ventilation selon les revendications 1, 6 et 7, **caractérisée en ce que** le disque de soupape (9) présente un côté supérieur (11) dont la surface d'intersection avec la première surface de hauteur (F₁) représente 55 % à 65 % de la surface de la première surface de hauteur (F₁), la surface d'intersection avec la deuxième surface de hauteur (F₂) représente 1,5 % à 3 % de la surface de la deuxième surface de hauteur (F₂) et la surface d'intersection avec la troisième surface de hauteur (F₃) représente 0,5 % à 1 % de la surface de la troisième surface de hauteur (F₃), aucune surface d'intersection n'étant présente au-dessus de la troisième surface de hauteur (F₃).

10. Unité de ventilation selon les revendications 1, 6, 7 et 8, **caractérisée en ce que** le disque de soupape (9) présente un côté supérieur (11) dont la surface d'intersection avec la première surface de hauteur (F₁) représente 65 % à 75 % de la surface de la première surface de hauteur (F₁), la surface d'intersection avec la deuxième surface de hauteur (F₂) représente 40 % à 50 % de la surface de la deuxième surface de hauteur (F₂), la surface d'intersection avec la troisième surface de hauteur (F₃) représente 6 % à 10 % de la surface de la troisième surface de hauteur (F₃), et la surface d'intersection avec la quatrième surface de hauteur (F₄) représente 0;5 % à 1,0 % de la surface de la quatrième surface de hauteur (F₄)

11. Unité de ventilation selon l'une quelconque des revendications 1 à 10, **caractérisée en ce que** la structure en reliefs et creux (13) du côté supérieur (11) du disque de soupape (9) a été réalisée par un procédé additif, en particulier SLM (fusion sélective au laser), sur la surface de base (12) du disque de soupape (9).

12. Moule de vulcanisation pour un pneumatique de véhicule, **caractérisé en ce qu'**il présente au moins une unité de ventilation (6) qui est réalisée selon une ou plusieurs des revendications précédentes.

13. Pneumatique de véhicule, **caractérisé en ce qu'**il est vulcanisé à l'aide d'un moule de vulcanisation selon la revendication 12, le pneu présentant des empreintes ou estampages circulaires des disques de soupape (9) d'unités de ventilation (6) au moins sur la surface de bande de roulement, qui présentent une structure irrégulière en reliefs et creux couvrant toute la surface, avec une rugosité moyenne Sa rapportée à la surface selon la norme DIN EN ISO 25178 et une différence de hauteur maximale Sz selon la norme DIN EN ISO 25178,
la rugosité moyenne rapportée à la surface Sa des empreintes ou estampages circulaires étant de 0,20 mm à 0,30 mm et la différence de hauteur maximale Sz étant de 0,80 mm à 0,85 mm ou
la rugosité moyenne rapportée à la surface Sa des empreintes ou estampages circulaires étant de 0,40 mm à 0,60 mm et la différence de hauteur maximale Sz étant de 2,00 mm à 2,25 mm.
